# DEMANDE DE BREVET EUROPEEN

(11) **EP 4 815 276 A1**
(43) Date de publication de la demande: **30.09.2026**
(21) Numéro de dépôt: 25165896.9
(22) Date de dépôt: 25.03.2025
(51) Int. Cl.: H02M 1/00, H02M 3/00, H02M 3/335, H02M 1/12, H02M 1/32, H02M 1/38

(54) **DISPOSITIF DE CHARGE POUR GENERATEUR DE VAGUES AUTONOME**

(71) Demandeur: Wow Company International SA, 6220 Fleurus (BE)
(72) Inventeur: FREBEL, Fabrice, 4020 WANDRE (BE); BREUER, Xavier, 4845 Sart-lez-Spa (BE); HORION, Didier, 5350 Evelette (BE); IANNELLO, Daniel, 4621 Retinne (BE); HAINE, Léo, 4217 Waret-l'Evêque (BE)
(74) Mandataire: AWA Benelux

(57) **Abrégé**

La présente invention divulgue un dispositif de charge par induction avec tolérance au positionnement relatif entre un inducteur et un induit, ledit dispositif comprenant une partie émettrice et une partie réceptrice apte à être connectée à une batterie d'un appareil à charger, la partie émettrice comprenant un circuit électrique de type convertisseur résonnant LLC comprenant :
- une entrée de courant continu ayant une borne positive et une borne négative ;
- une sortie de courant alternatif ayant une borne de phase et une borne de neutre;
- une topologie de commutateur constituée d'au moins un premier demi-pont ayant un premier commutateur (X1) en série avec un deuxième commutateur (X2), ledit premier commutateur (X1) étant connecté à une extrémité à la borne positive de l'entrée de courant continu, ledit deuxième commutateur (X2) étant connecté à une extrémité à la borne négative de l'entrée de courant continu, l'autre extrémité du premier commutateur (X1) étant connectée à l'autre extrémité du deuxième commutateur (X2), définissant une première extrémité commune, ladite première extrémité commune étant connectée à la borne de phase de la sortie de courant alternatif ;
- un bobinage inducteur L1;

et la partie réceptrice apte à être connectée à une batterie d'un appareil à charger comprenant un circuit redresseur pour redresser le courant alternatif circulant dans un bobinage induit L2 du circuit;
le dispositif comprenant également un circuit de contrôle pour ajuster la fréquence de commutation et la modulation des commutateurs en fonction de la charge ;
chaque au moins un demi-pont du convertisseur résonnant LLC comprenant au moins un diviseur résistif comprenant deux résistances en série (RPa, RPb), la première extrémité du premier diviseur résistif étant connectée à ladite première extrémité commune, la seconde extrémité du premier diviseur résistif étant connectée à la borne négative de l'entrée de courant continu, le premier diviseur résistif permettant de mesurer la tension de phase;
le circuit de contrôle étant configuré pour s'assurer que la fréquence de commutation est toujours au-dessus de la fréquence de résonance et avec un fonctionnement en commutation à tension nulle ou ZVS, sur base de la comparaison dans le temps des signaux de grille (GA, GB) des commutateurs d'un même demi-pont et de la tension drain-source (GA_FB) d'un de ces commutateurs.

## Description

### Objet de l'invention

La présente invention se rapporte au domaine des dispositifs de charge par induction (donc sans fil), pour des appareils dont une tolérance au positionnement entre la partie réceptrice et la partie émettrice du dispositif de charge est nécessaire. En particulier, la présente invention se rapporte à un chargeur pour générateurs de vagues à autonomie énergétique embarquée, tels que des boules à vagues, dont le chargement a lieu à la surface de l'eau, ce qui complique le positionnement de la partie réceptrice présente sur la boule à vagues par rapport à la partie émettrice du dispositif de charge.

### Etat de la technique

A l'heure actuelle, les dispositifs de charge sans fil sont au centre de nombreuses recherches. Il est bien connu que le chargement par induction apporte un grand nombre d'avantages. Néanmoins, il est nécessaire que l'appareil électronique à charger soit placé d'une manière spécifique de sorte que la bobine d'induction du chargeur et la bobine d'induction de l'appareil se chevauchent suffisamment et soient maintenues à une distance inférieure à un certain seuil. Si l'appareil n'est pas placé correctement sur le chargeur dès le départ, ou s'il est placé correctement et déplacé ultérieurement par inadvertance, l'appareil ne se chargera pas du tout, ou se chargera à un rythme plus lent et non optimal par rapport à la capacité du chargeur. Par conséquent, le placement correct du chargeur à induction et de l'appareil électronique l'un par rapport à l'autre, et le maintien de ce positionnement est important pour une charge optimale.

Dans le cas des générateurs de vagues, comme décrits par exemple dans le document EP0521884B1, le générateur peut être alimenté par batterie et éventuellement comprendre une batterie rechargeable qui peut être rechargée par un courant transitant via un couplage magnétique. Dans ce cas, le générateur doit pouvoir recharger périodiquement sa source d'énergie. Plusieurs moyens pour mettre en contact une partie réceptrice de recharge de la batterie avec la partie émettrice de recharge par contact ou induction sont imaginables. Cependant, aucune solution concrète n'est apportée pour la réalisation du chargement des générateurs de vagues. Le transfert d'énergie entre la partie émettrice et la partie réceptrice est un problème qui comprend un grand nombre de contraintes, notamment dues au milieu aqueux chloré dans lequel évolue le générateur de vagues, et au fait que le positionnement de l'émetteur sur la partie réceptrice est difficile à réaliser avec précision.

### Buts de l'invention

La présente invention vise à surmonter les inconvénients de l'état de la technique, et en particulier à fournir un dispositif de charge avec une tolérance au positionnement améliorée, permettant le chargement d'appareils dont le positionnement est difficile à réaliser avec précision.

Un but particulier de l'invention est de fournir un dispositif de charge adapté aux générateurs de vagues avec autonomie énergétique embarquée. Le dispositif est autonome afin d'optimiser et d'autogérer la recharge du générateur de vagues, avec une intervention limitée ou nulle de l'utilisateur. Par ailleurs, le dispositif de charge est compatible avec le caractère chimique des milieux aqueux chlorés et des risques d'oxydation liés.

Un autre but de l'invention est encore d'offrir une solution la plus simple et la plus fiable possible, étant donné que le générateur de vagues autonome est un dispositif scellé dont l'accès à l'intérieur doit être évité.

L'invention a également pour but d'offrir un dispositif de charge sans fil permettant la recharge d'appareils n'ayant aucun canal de communication physique entre l'appareil et le monde extérieur, hormis un canal de communication radio-fréquence.

### Principaux éléments caractéristiques de l'invention

La présente invention divulgue un dispositif de charge par induction avec tolérance au positionnement relatif entre un inducteur et un induit, ledit dispositif comprenant une partie émettrice et une partie réceptrice apte à être connectée à une batterie d'un appareil à charger, la partie émettrice comprenant un circuit électrique de type convertisseur résonnant LLC comprenant :
- une entrée de courant continu ayant une borne positive et une borne négative ;
- une sortie de courant alternatif ayant une borne de phase et une borne de neutre;
- une topologie de commutateur constituée d'au moins un premier demi-pont ayant un premier commutateur (X1) en série avec un deuxième commutateur (X2), ledit premier commutateur (X1) étant connecté à une extrémité à la borne positive de l'entrée de courant continu, ledit deuxième commutateur (X2) étant connecté à une extrémité à la borne négative de l'entrée de courant continu, l'autre extrémité du premier commutateur (X1) étant connectée à l'autre extrémité du deuxième commutateur (X2), définissant une première extrémité commune, ladite première extrémité commune étant connectée à la borne de phase de la sortie de courant alternatif;
- un bobinage inducteur L1;

et la partie réceptrice apte à être connectée à une batterie d'un appareil à charger comprenant un circuit redresseur pour redresser le courant alternatif circulant dans un bobinage induit L2 du circuit;
et un circuit de contrôle pour ajuster la fréquence de commutation et la modulation des commutateurs en fonction de la charge ;
chaque au moins un demi-pont du convertisseur résonnant LLC comprend au moins un diviseur résistif comprenant deux résistances en série (RPa, RPb), la première extrémité du premier diviseur résistif étant connectée à ladite première extrémité commune, la seconde extrémité du premier diviseur résistif étant connectée à la borne négative de l'entrée de courant continu, le premier diviseur résistif permettant de mesurer la tension de phase;
le circuit de contrôle étant configuré pour s'assurer que la fréquence de commutation est toujours au-dessus de la fréquence de résonance et avec un fonctionnement en commutation à tension nulle ou ZVS, sur base de la comparaison dans le temps des signaux de grille (GA, GB) des commutateurs d'un même demi-pont et de la tension drain-source (GA_FB) d'un de ces commutateurs.

Selon des modes d'exécution particuliers, l'invention comporte une ou plusieurs des caractéristiques suivantes :
- le dispositif de charge comprend un seul demi-pont ayant le premier commutateur (X1) en série avec le deuxième commutateur (X2), la partie émettrice comprenant une ou plusieurs capacités, disposée(s) de l'une des manières suivantes :
   - une première capacité (C3) étant connectée à une extrémité à la borne positive de l'entrée de courant continu, une seconde capacité (C4) étant connectée à une extrémité à la borne négative de l'entrée de courant continu, l'autre extrémité de la première capacité (C3) étant connectée à l'autre extrémité de la seconde capacité (C4), définissant une deuxième extrémité commune, la deuxième extrémité commune étant connectée à la borne de neutre de la sortie de courant alternatif, et une troisième capacité (Cs) étant située entre la deuxième extrémité commune et la borne neutre de la sortie de courant alternatif ; ou
   - une première capacité (C3) étant connectée à une extrémité à la borne positive de l'entrée de courant continu, une seconde capacité (C4) étant connectée à une extrémité à la borne négative de l'entrée de courant continu, l'autre extrémité de la première capacité (C3) étant connectée à l'autre extrémité de la seconde capacité (C4), définissant une deuxième extrémité commune, la deuxième extrémité commune étant connectée à la borne de neutre de la sortie de courant alternatif; ou
   - une seule capacité (C3) étant connectée à une extrémité à la borne positive de l'entrée de courant continu et à l'autre extrémité à la borne de neutre de la sortie de courant alternatif ; ou
   - une seule capacité (C4) étant connectée à une extrémité à la borne négative de l'entrée de courant continu et à l'autre extrémité à la borne de neutre de la sortie de courant alternatif.
- le commutateur comprend deux demi-ponts, le deuxième demi-pont ayant un troisième commutateur (X3) en série avec un quatrième commutateur (X4), le troisième commutateur (X3) étant connecté à une extrémité à la borne positive de l'entrée de courant continu, le quatrième commutateur (X4) étant connecté à une extrémité à la borne négative de l'entrée de courant continu, l'autre extrémité du troisième commutateur (X3) étant connectée à l'autre extrémité du quatrième commutateur (X4), définissant une deuxième extrémité commune, la deuxième extrémité commune étant connectée à la borne de neutre de la sortie de courant alternatif, et un second diviseur résistif est prévu, comprenant deux résistances en série (RNa, RNb), la première extrémité du second diviseur résistif étant connectée à ladite seconde extrémité commune et la seconde extrémité du second diviseur résistif étant connectée à la borne négative de l'entrée de courant continu, le second diviseur résistif permettant de mesurer la tension de neutre, le bobinage inducteur L1 étant en série avec une capacité, l'ensemble étant connecté entre la première extrémité commune et la seconde extrémité commune ;
- le circuit de contrôle, permettant de détecter si le circuit est en fonctionnement ZVS ou non, établit une puissance de sortie du circuit en fonction du résultat obtenu ;
- le circuit redresseur comprend un pont à diodes (D1, D2, D3, D4) ;
- la partie émettrice comprend un convertisseur DC/DC pouvant se connecter à une source d'énergie électrique et fournissant une tension sur un câble permettant d'alimenter le circuit électrique de type convertisseur résonnant LLC ;
- la partie réceptrice comprend un circuit de système de gestion de batterie, dit « BMS », connecté au circuit redresseur et, en utilisation, à une batterie à recharger ;
- la partie réceptrice comprend une carte de transmission connectée au BMS à l'aide d'un canal de communication permettant en utilisation d'envoyer l'information d'état de la batterie à la partie émettrice pour permettre de déterminer le besoin en charge de la batterie ;
- le canal de communication est un canal radio-fréquence, connecté à une carte de réception prévue dans la partie émettrice, la carte de réception étant connectée au circuit électrique au moyen d'un canal de communication, permettant en utilisation le décodage et l'envoi de l'information radio au circuit électrique responsable de la recharge ;
- le dispositif de charge comprend un système de détection du courant de fuite comprenant :
   - un filtre de mode commun ajouté en série au circuit électrique, comprenant deux inductances de fuite LMCP et LMCM ;
   - deux capacités Cpar1 et Cpar2 modélisant la capacité parasite de couplage des inductances L1 et L2 ; et
   - une résistance à la terre Rtouch pour modéliser le cas d'une personne touchant le circuit ;
      le courant de fuite étant calculé en mesurant la tension aux bornes de la seconde inductance par un détecteur de tension, cette tension étant une image du courant de fuite qui est la somme des courants dans Rtouch, Cpar1 et Cpar2 ; le système de détection de courant de fuite étant configuré pour stopper la conversion si ladite tension dépasse un seuil, par exemple 500mVrms.
- le dispositif de charge comprend un système d'appairage de l'inducteur L1 et de l'induit L2, comprenant un premier interrupteur reed sur l'inducteur et un second interrupteur reed sur l'induit ainsi qu'un aimant permanent et une bobine commandable prévus respectivement sur l'induit et l'inducteur ;
- l'inducteur et l'induit ont des formes mécaniques complémentaires propices à un centrage naturel, plusieurs aimants permanents étant disposés sur le pourtour de l'inducteur.

La présente invention concerne également l'utilisation du dispositif de charge, la partie réceptrice étant prévue dans un système de génération de vagues autonome et intelligent destiné à créer une vague maîtrisée sur une surface liquide, comprenant une autonomie énergétique embarquée restant à poste dans le générateur de vagues lors du rechargement.

La présente invention concerne aussi le système de génération de vagues, autonome et intelligent, comprenant notamment une autonomie énergétique embarquée et un dispositif de charge par induction avec tolérance au positionnement selon l'invention, ladite partie émettrice étant située hors du liquide et la partie réceptrice étant solidaire du générateur de vagues et connectée à l'autonomie embarquée du système de génération de vagues.

Selon des modes d'exécution particuliers, le système de génération de vagues comporte une ou plusieurs des caractéristiques suivantes :
- la partie réceptrice est fixée sur la coque externe du générateur de vagues ;
- le dispositif de charge comprend des moyens de recharge de l'autonomie énergétique embarquée qui restent à poste dans le générateur de vagues lors du (re)chargement ;
la connexion de la partie émettrice à la partie réceptrice du dispositif de charge se fait soit à l'aide d'une perche de rechargement, soit à l'aide d'un véhicule de chargement mobile, de type drone nautique ou aérien, soit par déplacement autonome du générateur jusqu'à une station de chargement grâce à un contrôle automatique et régulé de sa position.

### Brève description des figures

La figure 1 représente une vue schématique d'un appareil à recharger, en contact avec le dispositif de charge.
La figure 2 représente un circuit électrique de pilotage d'un inducteur selon l'art antérieur.
La figure 3 représente un circuit électrique de pilotage de l'inducteur du dispositif de charge selon la présente invention, le circuit électrique de type convertisseur résonnant LLC comprenant dans ce cas une topologie de commutateur à pont complet en H avec deux demi-ponts .
La figure 4 représente un schéma de fonctionnement du circuit électrique de pilotage de la figure 3, avec une fréquence de commutation de 86 kHZ. A cette fréquence, le circuit fonctionne toujours sans pertes de commutation (fonctionnement en « ZVS » - zero voltage switching) et transfère le maximum de puissance.
La figure 5 représente un schéma de fonctionnement du circuit électrique de pilotage de la figure 3, avec une fréquence de commutation qui est en dessous de la fréquence de résonance du circuit. A cette fréquence inférieure de la fréquence de résonance, un fonctionnement non « ZVS » est obtenu, entrainant des pertes de commutation importantes.
La figure 6 représente un schéma de fonctionnement du circuit électrique de pilotage de la figure 3, dans lequel des éléments relatifs à la détection du courant de fuite ont été représentés.
La figure 7 représente respectivement l'inducteur du dispositif de charge et l'induit de l'appareil à recharger, munis d'un dispositif d'appairage.
La figure 8 représente une vue en coupe d'un générateur de vagues autonome en fonctionnement.
La figure 9 représente une vue en coupe d'un générateur de vagues en position de recharge. Dans ce cas, le dispositif de recharge est par exemple supporté et amené au contact du générateur de vagues par un support mobile, de type drone nautique.
Les figures 10A à D représentent un circuit électrique de pilotage de l'inducteur du dispositif de charge selon la présente invention, comprenant dans ce cas une topologie de commutateur formée par un seul demi-pont. La partie émettrice comprend une ou plusieurs capacités, disposée(s) de manières différentes offrant plusieurs solutions de contrôle.

### Liste des symboles de référence

1 : source d'énergie (prise secteur par exemple)
2 : convertisseur DC/DC
3 : câble d'alimentation du circuit électrique 4
4 : convertisseur DC/AC
5 : inducteur de la partie émettrice
6 : induit de la partie réceptrice
7 : redresseur
8 : connexion entre le redresseur et le BMS
9 : Battery Management System (BMS)
10 : batterie
11 : canal de communication entre le BMS 9 et la carte de transmission 12
12 : carte de transmission
13 : carte de réception
14 : canal de communication entre la carte de réception 13 et le circuit électrique 4
15 : contrôleur du circuit LLC (inducteur)
20 : émetteur/récepteur de l'interface utilisateur
21 : générateur de vagues
22 : corps externe (enveloppe externe) du générateur de vagues 21
23 : corps interne mobile du générateur de vagues 21
24 : dispositif du déplacement du corps interne 23
27 : communication radio entre l'interface 28 et l'utilisateur du générateur de vagues
28 : interface utilisateur du générateur de vagues 21
29 : drone nautique télécommandé avec propulseur et système de positionnement
31 : première capacité parasite (Cpar1)
32 : seconde capacité parasite (Cpar2)
33 : première inductance du filtre de mode commun (LMCM)
34 : seconde inductance du filtre de mode commun (LMCP)
35 : résistance de fuite (Rtouch)
36 : détecteur de tension
100 : bobinage inducteur
101 : bobinage induit
102 : aimant permanent
103 : premier interrupteur reed de l'inducteur
104 : second interrupteur reed de l'induit
105 : bobine commandable

### Description détaillée de l'invention

La présente invention concerne un dispositif de charge par induction, pour des appareils dont une tolérance au positionnement relatif entre la partie réceptrice et la partie émettrice du dispositif de charge est nécessaire. Il est convenu que le dispositif de charge de la présente invention comprend la partie émettrice dite « chargeur » et la partie réceptrice qui, elle, est présente sur l'appareil à (re)charger.

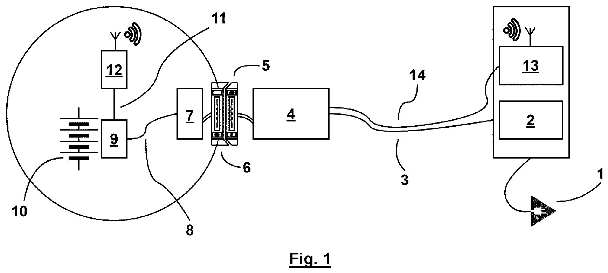

Tel qu'illustré sur la figure 1, la partie émettrice est alimentée par une source d'énergie, par exemple via une prise secteur classique 1. La source d'énergie 1 permet d'alimenter un convertisseur DC/DC 2 fournissant ensuite une tension sur un câble 3. Dans le cas où le dispositif de charge est utilisé dans un milieu aqueux, cette tension est limitée à 30 Vdc pour des raisons de sécurité. Cette tension du câble 3 permet d'alimenter un circuit électrique du type convertisseur DC/AC 4 capable de piloter un inducteur 5. Pour le chargement de l'appareil, l'inducteur 5 sera placé à proximité d'un induit 6 de la partie réceptrice solidaire de l'appareil à charger.

Le transfert de puissance entre l'inducteur 5 et l'induit 6 se réalise en courant alternatif. Par la suite, ce courant alternatif est redressé à l'aide d'un circuit redresseur 7 compris dans la partie réceptrice. La tension redressée, de préférence de l'ordre de 28.5 Vdc, est transportée vers un circuit classique de Battery Managment System 9, dit « BMS ». Une batterie 10 est directement connectée au BMS et peut donc être chargée à l'aide du circuit de ce BMS 9.

La partie réceptrice comprend également une carte de transmission haute fréquence 12, qui est connectée au BMS 9 à l'aide d'un canal communication 11, la connexion se faisant de préférence en série. De cette manière, la carte de transmission HF 12 peut envoyer l'information de l'état de charge de la batterie 10, ainsi que d'autres informations comme la température de la batterie par exemple, à la partie émettrice pour permettre de déterminer le besoin en recharge de la batterie 10. De préférence, l'information est envoyée par un canal de communication radio-fréquence à une carte de réception 13 prévue dans la partie émettrice. La carte de réception 13 décode l'information radio et envoie des instructions au circuit électrique 4 responsable de la recharge, au moyen d'un canal de communication 14. De préférence, la communication se fait à l'aide d'une transmission série.

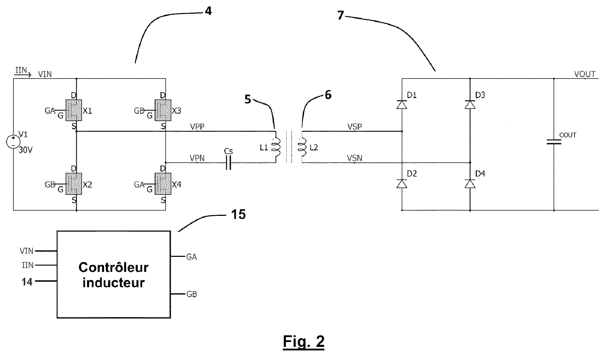

Le circuit électrique représenté à la figure 2 est un circuit de pilotage classique de l'art antérieur, capable de piloter un inducteur 5 ainsi qu'un induit 6 comme ceux prévus dans le dispositif de charge de la présente invention. Ce circuit est appelé communément « convertisseur LLC ». Le convertisseur LLC est un convertisseur résonnant qui comprend trois composants passifs : une inductance de magnétisation de transformateur, une inductance de fuite du même transformateur et un condensateur résonnant. Ces composants créent un circuit résonant qui permet au convertisseur de fonctionner à une fréquence proche de la fréquence de résonance, ce qui optimise l'efficacité et réduit les pertes.

Lorsque l'inducteur 5 est placé à proximité de l'induit 6, ils sont couplés magnétiquement et forment un transformateur. Ce transformateur a une inductance de fuite qui est non négligeable et qui mène à un coefficient de couplage (appelé k par l'homme de métier) de l'ordre de 0.85. L'effet de cette inductance de fuite est compensé par un condensateur Cs prévu dans le circuit 4, le tout piloté par exemple par un pont à transistors (X1, X2, X3, X4), par exemple de type MOSFET, GaN, SiC,... L'induit 6 présente une tension alternative qui sera redressée ensuite par un redresseur 7 comprenant un pont à diodes D1, D2, D3 et D4. Un contrôleur 15 est responsable de générer des signaux GA et GB de commande des transistors (X1, X2, X3, X4) du pont à transistors. Pour se faire, le contrôleur 15 reçoit une consigne de puissance au travers du canal de communication 14. Le bloc 15 est également capable de mesurer la tension d'entrée et le courant d'entrée du circuit au moyen de méthodes connues de l'homme de métier (pont diviseur résistif pour V_{IN} et capteur de courant pour I_{IN}).

Dans le cas de la présente invention, les deux inductances couplées 5 et 6 ont une valeur incertaine, car le transformateur ainsi formé dépend des positions mécaniques de l'inducteur 5 de la partie émettrice et de l'induit 6 de la partie réceptrice. Malgré les précautions prises lors du rapprochement de l'inducteur et de l'induit, les tolérances mécaniques sont bien plus importantes que dans le cas d'un circuit LLC basé sur un transformateur classique, ce qui engendre des valeurs de couplage incertaines. La conséquence de cette incertitude impose de prendre des marges de sécurité afin de s'assurer de travailler toujours au-dessus de la fréquence de résonance. En effet, si la fréquence de fonctionnement descend en dessous de la fréquence de résonance, des pertes de commutation inacceptables pour les transistors apparaissent et peuvent mener à la destruction de ces derniers (particulièrement lorsqu'il s'agit de transistors MOSFET). Cependant, il est indispensable que le circuit fonctionne à la fréquence la plus basse possible, étant donné qu'un circuit LLC transfère d'autant plus de puissance que sa fréquence de fonctionnement est basse. Dans le cas de la présente invention qui se rapporte au chargement d'appareils dont le positionnement entre la partie réceptrice et la partie émettrice n'est pas précis, il est donc d'intérêt que le circuit fonctionne à sa fréquence la plus basse possible mais tout en restant au-dessus de sa fréquence de résonance. La marge de sécurité sur la plage de fréquence utilisable est donc importante et peut limiter alors fortement la puissance maximale transférable de plusieurs dizaines de pourcents.

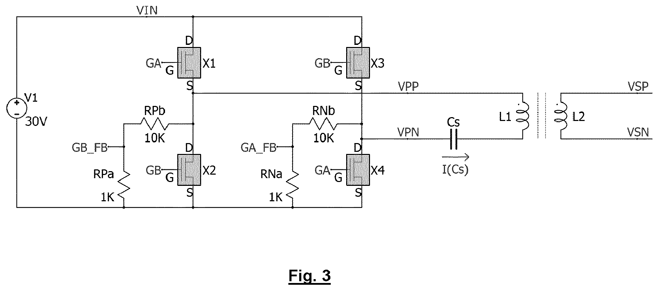

Par conséquent, la présente invention comprend un circuit différent du circuit LLC de l'art antérieur, tel que représenté sur la figure 2. Ce nouveau circuit est représenté par un exemple sur la figure 3. Il correspond au circuit LLC avec une topologie résonnante formée par au moins un demi-pont (deux demi-ponts dans le cas de l'exemple représenté sur la figure 3). En outre le circuit comprend au moins un diviseur résistif, à savoir un par demi-pont, chaque diviseur résistif comprenant deux résistances en série, respectivement RPa, RPb et RNa, RNb dans le cas du circuit de la figure 3. La présence du diviseur résistif permet de mesurer la tension de sortie du demi-pont et d'obtenir une image des moments de transition de cette tension. Ceci permet, grâce à l'information obtenue, de forcer le circuit 4 à toujours travailler à la puissance maximale atteignable du circuit tout donnant la garantie d'avoir un fonctionnement sans pertes de commutation, appelé fonctionnement en commutation sous zéro tension ou ZVS, pour « zero voltage switching ». Dans le cas où deux diviseurs résistifs sont présents, cela permet une vérification des résultats obtenus pour garantir la fiabilité du circuit.

Plus précisément, comme illustré sur la figure 3, le circuit comprend une partie émettrice avec une inductance L1 (inducteur 5) et une partie réceptrice avec une inductance L2 (induit 6) formant le transformateur. La partie émettrice comprend :
- une entrée de courant continu ayant une borne positive et une borne négative ;
- une sortie de courant alternatif ayant une borne de phase et une borne de neutre;
- une topologie de commutateur à demi- pont comprenant au moins un premier demi-pont ayant un premier commutateur X1 en série avec un deuxième commutateur X2, le premier commutateur X1 étant connecté à une extrémité à la borne positive de l'entrée de courant continu, le deuxième commutateur X2 étant connecté à une extrémité à la borne négative de l'entrée de courant continu, l'autre extrémité du premier commutateur X1 étant connectée à l'autre extrémité du deuxième commutateur X2, définissant une première extrémité commune, ladite première extrémité commune étant connectée à la borne de phase de la sortie de courant alternatif ;
- pour chaque topologie demi-pont résonnante, un diviseur résistif, le premier diviseur résistif comprenant deux résistances en série, RPa, RPb la première extrémité du premier diviseur résistif étant connectée à la phase située entre la sortie du premier commutateur X1 et l'entrée du second commutateur X2 (première extrémité commune ci-dessus), la seconde extrémité du premier diviseur résistif étant connectée à la borne négative de l'entrée de courant continu. ,
- Le bobinage inducteur L1 (5) situé entre la première extrémité commune et la borne neutre de la sortie de courant alternatif.

D'autre part, la partie réceptrice comprend :
- une entrée de courant alternatif ayant une borne de phase et une borne de neutre;
- une sortie de courant continu ;
- un redresseur 7 comprenant de préférence un pont à diodes D1, D2, D3 et D4 (pont de Wheatstone), le redresseur étant situé entre l'entrée en courant alternatif et la sortie en courant continu.

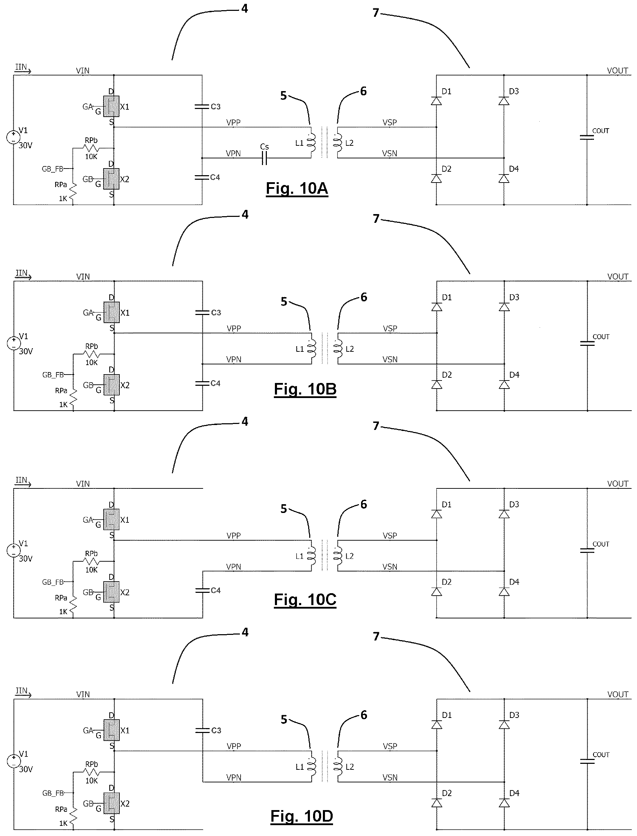

Dans le cas où le circuit de l'invention ne comprend qu'un seul demi-pont et un seul diviseur résistif, la partie émettrice doit comprendre une ou plusieurs capacités, disposée(s) de l'une des manières suivantes :
- soit trois capacités C3, C4 et Cs comme représenté sur la figure 10A. La capacité C3 est connectée à une extrémité à la borne positive de l'entrée de courant continu tandis que la capacité C4 est connectée à une extrémité à la borne négative de l'entrée de courant continu. L'autre extrémité de la capacité C3 est connectée à l'autre extrémité de la capacité C4, définissant une deuxième extrémité commune, la deuxième extrémité commune étant connectée à la borne de neutre de la sortie de courant alternatif. La capacité Cs est située entre la première extrémité commune et la borne neutre de la sortie de courant alternatif. La valeur de C3 est supérieure à Cs et la valeur de C4 est supérieure à Cs également, de manière à ce que la fréquence de résonance reste imposée par la valeur Cs ;
- soit deux capacités C3 et C4 comme représenté sur la figure 10B. Dans ce cas, les capacités C3 est C4 sont situées aux mêmes positions que dans le circuit 10A, mais la capacité Cs n'est pas présente. Les valeurs de C3 et C4 doivent être identiques pour garder la même capacité équivalente vue du primaire du transformateur, à savoir que les valeurs C3 et C4 sont telles que C3 + C4 = Cs (typiquement, on choisit C3 = C4 = Cs/2), la valeur de Cs étant celle du circuit de la figure 10A.
- soit une seule capacité C3 comme représenté sur la figure 10D. La capacité C3 est connectée à une extrémité à la borne positive de l'entrée de courant continu et à l'autre extrémité à la borne de neutre de la sortie de courant alternatif. Dans ce cas, la valeur de C3 équivaut à la valeur de Cs du circuit de la figure 10A ;
- soit une seule capacité C4 comme représenté sur la figure 10C. La capacité C4 est connectée à une extrémité à la borne négative de l'entrée de courant continu et à l'autre extrémité à la borne de neutre de la sortie de courant alternatif. Dans ce cas, la valeur de C4 équivaut à la valeur de Cs du circuit de la figure 10A.

De préférence, comme représenté sur le circuit de la figure 3, la topologie du commutateur est une topologie à pont complet en H, constituée d'un premier demi-pont ayant un premier commutateur X1 en série avec un deuxième commutateur X2, et d'un deuxième demi-pont ayant un troisième commutateur X3 en série avec un quatrième commutateur X4, le premier commutateur X1 étant connecté à une extrémité à la borne positive de l'entrée de courant continu, le deuxième commutateur X2 étant connecté à une extrémité à la borne négative de l'entrée de courant continu, l'autre extrémité du premier commutateur X1 étant connectée à l'autre extrémité du deuxième commutateur X2, définissant une première extrémité commune, ladite première extrémité commune étant connectée à la borne de phase de la sortie de courant alternatif, le troisième commutateur X3 étant connecté à une extrémité à la borne positive de l'entrée de courant continu, le quatrième commutateur X4 étant connecté à une extrémité à la borne négative de l'entrée de courant continu, l'autre extrémité du troisième commutateur X3 étant connectée à l'autre extrémité du quatrième commutateur X4, définissant une deuxième extrémité commune, la deuxième extrémité commune étant connectée à la borne de neutre de la sortie de courant alternatif. Pour chaque topologie demi-pont résonnante, un diviseur résistif est prévu, le premier diviseur résistif comprenant deux résistances en série, RPa, RPb et le second diviseur résistif comprenant deux résistances en série RNa, RNb, la première extrémité du premier diviseur résistif étant connectée à la phase située entre la sortie du premier commutateur X1 et l'entrée du second commutateur X2 (première extrémité commune ci-dessus), la seconde extrémité du premier diviseur résistif étant connectée à la borne négative de l'entrée de courant continu, la première extrémité du second diviseur résistif étant connectée à la phase située entre la sortie du troisième commutateur X3 et l'entrée du quatrième commutateur X4 (seconde extrémité commune ci-dessus) et la seconde extrémité du second diviseur résistif étant connectée à la borne négative de l'entrée de courant continu. Dans ce cas de topologie de commutateur à pont complet en H avec deux diviseurs résistifs, une capacité Cs est située en série avec le bobinage inducteur L1 (5), l'ensemble étant connecté entre la première extrémité commune et la seconde extrémité commune.

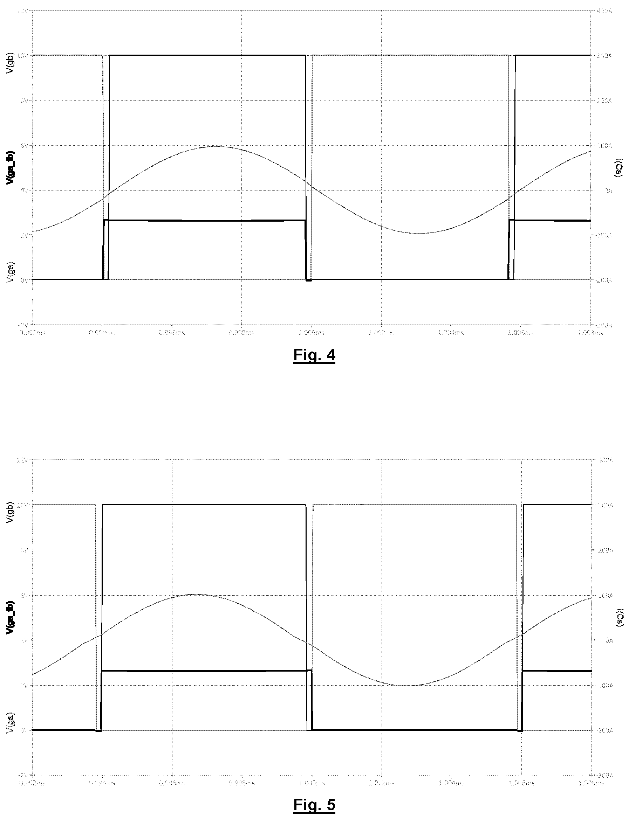

Les graphes des figures 4 et 5 reprennent les tensions de grille V(ga) et V(gb) des transistors X4 et X3 respectivement du circuit de la figure 3. Le signal V(ga_fb) qui est également représenté est une image de la tension drain-source de X4 mesurée à l'aide d'un diviseur potentiométrique et apte à être capturée par un dispositif logique tel qu'un micro-contrôleur ou tout autre dispositif de contrôle (comme les ponts diviseurs RPa, RPb, RNa, RNb). Le signal I(Cs) correspond au courant mesuré au condensateur Cs.

Lorsque le circuit de la présente invention fonctionne au-dessus de la fréquence de résonance, par exemple une fréquence de commutation de 86 kHz, tel que représenté sur la figure 4, il transfère le maximum de puissance et fonctionne toujours en ZVS. Cependant, lorsque la fréquence de commutation du circuit descend en dessous de la fréquence de résonance, tel que représenté sur la figure 5, un fonctionnement non ZVS est obtenu, entraînant des pertes de commutation importantes.

L'analyse comparative des figures 4 et 5 peut se faire en prenant l'exemple de la transition qui s'opère au temps 0.994ms, en considérant les transistors X3 et X4 du circuit de la figure 3. Sur la figure 4, à l'instant auquel V(ga) tombe à 0V, le courant I(Cs) est négatif (environ -20A). Cela signifie que le courant va entrer dans le drain de X4 et va donc provoquer une montée rapide de la tension drain source de X4, ce qui est observable sur le signal V(ga_fb). Environ 200ns plus tard, le transistor X3 est commandé par la tension V(gb), mais, comme la tension drain-source aux bornes de X4 a atteint la tension d'alimentation V1 de 30V (comme le montre le signal V(ga_fb) qui en est une image), la tension drain-source aux bornes de X3 s'est annulée. Le transistor X3 se ferme de façon douce étant donné que la tension est nulle. Il s'agit de la situation souhaitée, à savoir une commutation ZVS (zero voltage switching) qui minimise les pertes de commutation.

Sur la figure 5, la différence est que le courant I(Cs) est positif à l'instant auquel la tension V(ga) tombe à 0V. La tension drain-source aux bornes de X4 reste constante car le courant n'est pas dans la bonne direction. Ce n'est que quand le transistor X3 est commandé par la tension V(gb) que la tension drain-source aux bornes de X4 remonte, forcée par la fermeture de X3. Il s'agit ici d'une commutation dure qui provoque des pertes de commutation pouvant mener à la destruction des transistors à cause des caractéristiques de leur diode intrinsèque qui est en conduction lors de la fermeture de X3.

Afin de pouvoir optimiser les pertes du circuit 4 de la présente invention, le dispositif de charge comprend un dispositif de contrôle digital, par exemple un minuteur dans un micro-contrôleur, ou analogique, permettant de mesurer le temps qui s'écoule entre l'instant auquel la tension V(ga) tombe à 0V et l'instant auquel le signal V(ga_fb) remonte. Ce dispositif de contrôle permet donc de mesurer le laps de temps entre chaque transition. Si ce temps est inférieur à une limite, par exemple 100ns, le dispositif de contrôle en déduit que le circuit 4 est en fonctionnement ZVS et que le circuit 4 peut donc fonctionner. Cependant, si ce temps est supérieur à 100ns, le dispositif de contrôle en déduit que le fonctionnement du circuit s'approche de la situation de la figure 5 pour laquelle les pertes de commutation sont trop élevées. Le dispositif de contrôle peut alors décider de limiter la puissance de sortie du circuit 4 (et donc de remonter la fréquence de commutation) pour revenir en fonctionnement ZVS. Si la situation perdure malgré cela, le dispositif de contrôle peut alors décider d'arrêter le circuit 4 pour éviter une défaillance. Grâce aux deux diviseurs résistifs du circuit 4 de la présente invention, ou à l'unique diviseur résistif et aux condensateurs (C3, C4 et/ou Cs), la courbe de tension et les transitions sont mesurées, et l'intervalle de temps entre ces transitions permet au dispositif de contrôle d'analyser le fonctionnement du circuit, afin de modifier la puissance de sortie du circuit 4 et ainsi le forcer à toujours travailler en ZVS, à la puissance maximale atteignable du circuit tout en donnant une garantie de fonctionnement sans pertes de commutation.

Le dispositif de charge selon la présente invention peut également comprendre un système de détection du courant de fuite. Celui-ci comprend un filtre de mode commun ajouté en série au circuit électrique 4, du côté de la partie émettrice, le filtre de mode commun comprenant deux inductances LMCP et LMCM (typiquement bobinées sur un même noyau. Dans le cas du circuit de la figure 3 comprend un pont complet en H et deux diviseurs résistifs, la première inductance LMCP est connectée à sa première extrémité à la borne positive de l'entrée de courant continu, et à sa seconde extrémité aux premières extrémités du premier et du troisième transistor X1 et X3. La seconde inductance LMCM est connectée à sa première extrémité à la borne négative de l'entrée de courant continu, et à sa seconde extrémité aux secondes extrémités du deuxième et du quatrième transistor X2 et X4.

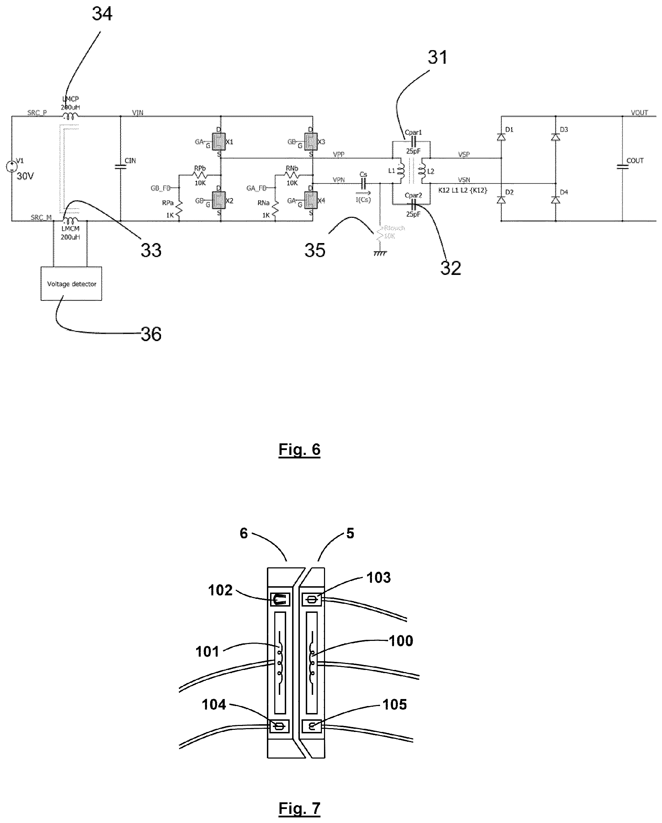

Le schéma de montage du système de détection du courant de fuite est représenté à la figure 6, reprenant les éléments relatifs à la détection du courant de fuite :
- deux capacités Cpar1 31 et Cpar2 32 qui modélisent la capacité parasite de couplage entre les inducteurs L1 et L2. Même si les inducteurs L1 et L2 sont proches, ils sont quand-même éloignés de quelques millimètres. La capacité parasite de couplage est relativement faible, de l'ordre de 50 pF, ce qui est modélisé par Cpar1 et Cpar2 de 25 pF chacune ;
- le filtre de mode commun comprenant les deux inductances de mode représentées par LMCP 33 et LMCM 34 ;
- un cas de défaut « Rtouch » qui permet de modéliser une personne qui toucherait un fil du transformateur. Il faut savoir que la tension aux bornes de Cs est augmentée à cause du fonctionnement en résonance du montage LLC.

L'objectif du système de détection de fuite est de détecter de façon la plus simple possible la présence d'un défaut à la terre, au nœud connecté à Rtouch 35. Pour ce faire, le courant de fuite est calculé en mesurant la tension (rms ou crète) aux bornes de l'inductance LMCM via un détecteur de tension (bloc « voltage-detector » 36 sur la figure 6), cette tension étant une image du courant de fuite qui est la somme des courants dans Rtouch et dans Cpar1, Cpar2. La conversion est stoppée si cette tension dépasse un seuil, par exemple 500mV.

En effet, des calculs et simulations ont démontré que la tension mesurée aux bornes de LMCM est un bon indicateur de présence de fuite. Dans le cas du montage de la figure 6, les résultats sont les suivants :
- en fonctionnement normal : s'il n'y a pas de fuite (Rtouch est infinie), la tension mesurée est de l'ordre de 200 mVrms résultant du courant de fuite résiduel qui traverse les capacités parasites Cpar1 et Cpar2.
- en cas de fuite additionnelle : si par exemple une personne touche le fil, modélisée par Rtouch de 10 kOhm (valeur typique), le courant de fuite traverse les deux inductances LMCM et LMCP et crée une chute de tension significative. Une tension de l'ordre de 1.2 Vrms est mesurée par le bloc "Voltage-detector".

Sur un site, il est possible que plusieurs appareils à charger, par exemple des générateurs de vagues, soient placés à proximité l'un de l'autre. Dans ce cas, il est important de s'assurer que l'inducteur 5 est bien positionné en face de l'induit 6 correspondant. Pour ce faire l'invention propose avantageusement un moyen d'appairage, tel que représenté sur la figure 7, utilisant deux interrupteurs reed 103, 104 (interrupteur ON/OFF réagissant à la présence d'un champ magnétique) et une bobine 105. Plus précisément, l'inducteur 5 comprend un bobinage inducteur 100 (L1) et l'induit 6 comprend un bobinage induit 101 (L2). Un premier interrupteur reed 103 est prévu sur l'inducteur 5, et un second interrupteur reed 104 est prévu sur l'induit 6. Ces interrupteurs reed 103, 104 se ferment en présence d'un champ magnétique. Par ailleurs, un aimant permanent 102 et la bobine commandable 105 sont prévus l'un sur l'induit 6 et l'autre sur l'inducteur 5.

Le circuit de pilotage de l'inducteur 4 comprend une logique digitale, qui est typiquement implémentée au sein d'un micro-contrôleur, et est responsable d'autoriser le transfert de puissance, uniquement si l'appairage est correct. Pour ce faire, le circuit 4 procède selon les étapes suivantes :
- il vérifie si l'interrupteur reed 103 est fermé, ce qui signifie que l'inducteur est positionné en face d'un aimant et donc probablement d'un induit ;
- si l'interrupteur reed 103 est fermé, il passe à l'étape suivante. Sinon, il revient à l'étape précédente ;
- le circuit 4 active et désactive régulièrement la bobine 105 en lui injectant ou non un courant continu, et ce selon une séquence pseudo-aléatoire. Cette activation/désactivation pseudo-aléatoire s'opère environ toutes les secondes ;
- l'état du second interrupteur reed 104 est connu du circuit 4 grâce aux moyens de communication radio 12 et 13. Ainsi, chaque fois que le circuit 4 active ou désactive la bobine 105, il vérifie que l'interrupteur reed 104 est respectivement fermé ou ouvert. Si l'état de l'interrupteur 104 correspond bien à l'état d'activation de la bobine 105, il en déduit après quelques secondes que le pairage est correct et que l'inducteur est bien placé en face de l'induit correspondant. La charge peut ainsi démarrer de façon sécurisée.

La figure 7 montre les formes mécaniques de l'inducteur et de l'induit propice à un centrage naturel. Afin de s'assurer que l'inducteur et l'induit sont maintenus proches l'un de l'autre, plusieurs aimants similaires à l'aimant 102 sont placés sur le pourtour de l'inducteur 5. Ceci crée une force d'attraction naturelle entre l'inducteur et l'induit.

### EXEMPLE : cas particulier du générateur de vagues

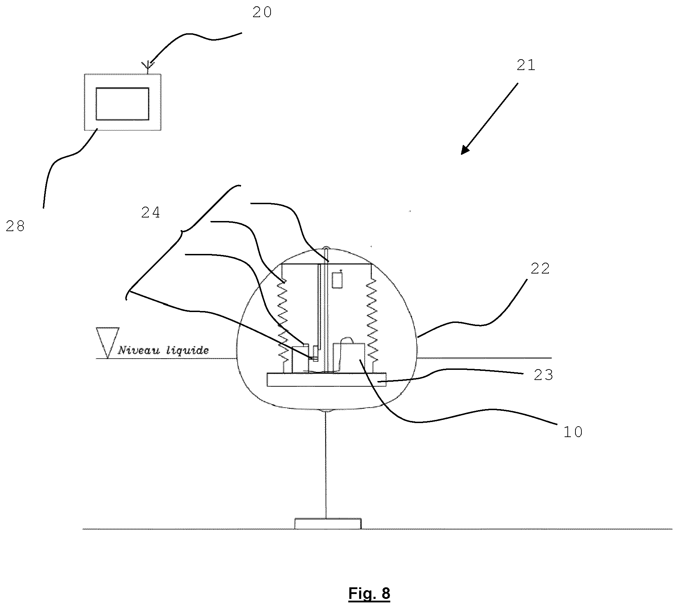

L'appareil à charger peut être un système de génération de vagues, destiné à créer un mouvement à la surface d'un liquide, par exemple dans un bassin. Un exemple de système de génération de vagues est illustré sur la figure 8. Le système comprend un générateur de vagues 21 situé dans un liquide, comprenant un corps externe 22 faisant office d'enveloppe et un corps interne 23 situé à l'intérieur du corps externe 22. Le corps interne 23 est mobile et agit comme une masse pesante qui monte et descend à l'intérieur du corps externe 22, à une certaine fréquence, et transfère de cette manière l'énergie au liquide pour créer une onde dans celui-ci.

Le générateur de vagues 21 comprend un dispositif de déplacement 24 du corps interne 23, pour faire osciller celui-ci à l'intérieur du corps externe 22. Une autonomie énergétique embarquée 10, en d'autres termes des capacités énergétiques embarquées, tel que par exemple une batterie, est comprise dans le générateur de vagues 21 afin de fournir l'énergie nécessaire au dispositif de déplacement 24. Par « embarqué », il est entendu tout au long de cette description que le dispositif en question, ici l'autonomie énergétique, est situé sur le générateur de vagues 21 situé dans le liquide (que cela soit à l'intérieur du corps externe 22 ou fixé à l'extérieur de celui-ci). L'autonomie embarquée 10 reste de préférence à poste dans le générateur 21.

Un dispositif de charge selon l'invention tel qu'expliqué précédemment permet de charger l'autonomie embarquée 10. La source d'énergie 1 avec la partie émettrice est située hors du liquide et est indépendante du générateur de vagues 21 qui est situé dans le liquide. La partie réceptrice est solidaire au générateur de vagues 21, et fixée de préférence sur la coque externe 22. Lors du chargement, il est nécessaire de pouvoir connecter la partie émettrice avec la partie réceptrice pour permettre le transfert d'énergie de la source d'énergie 1 vers les batteries 10.

Pour relier la partie chargeur à la partie réceptrice du générateur de vagues 1, plusieurs moyens peuvent être envisagés. Soit l'utilisateur sera averti via une interface 28 reliée à un contrôleur que le générateur 21 doit être rechargé, et il pourra recharger le générateur 21 en le déplaçant jusqu'à une station de chargement comprenant la partie émettrice du dispositif de charge 1, ou à l'aide d'une perche de rechargement qu'il viendra placer sur le générateur 21 qui restera en place dans le bassin. La perche doit être réglable en hauteur et est bien sûr inclinable.

Soit le générateur 21 va se déplacer de lui-même jusqu'à une station de chargement, située par exemple au bord du bassin, et se chargera seul, donc de manière autonome. Cette option est envisageable si le générateur de vagues 21 est équipé d'un contrôle automatique et régulé de sa position, en vue d'une connexion autonome.

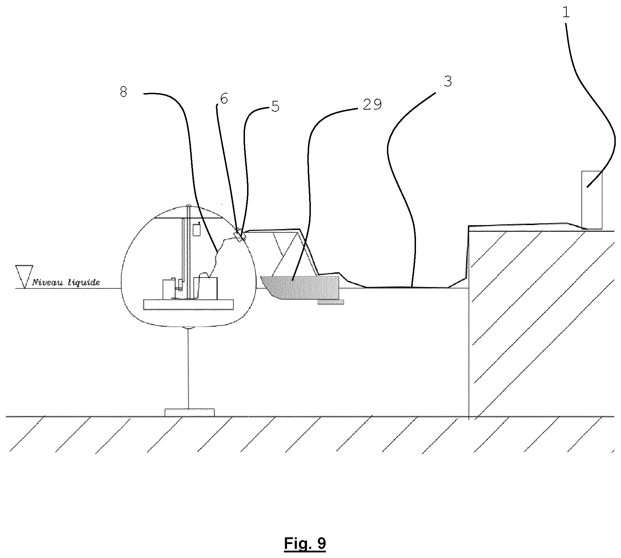

Soit, tel qu'illustré sur la figure 9, il est aussi possible qu'un véhicule de chargement mobile 29, de type drone nautique ou aérien, etc., se déplace jusqu'au générateur 21 pour que ce dernier puisse rester en place dans le bassin. Le véhicule mobile 29 emporte avec lui la partie émettrice pour l'induction reliée par le câble 3 à la source d'énergie pour la recharge 1. Il peut se déplacer jusqu'à une position localisée par le contrôleur pour procéder à la recharge. Le véhicule mobile 29 est télécommandé et comprend un propulseur et système de positionnement pour se déplacer jusqu'à la position déterminée pour le rechargement.

## Revendications

1. Un dispositif de charge par induction avec tolérance au positionnement relatif entre un inducteur (5) et un induit (6), ledit dispositif comprenant une partie émettrice et une partie réceptrice apte à être connectée à une batterie (10) d'un appareil à charger ; la partie émettrice comprenant un circuit électrique (4) de type convertisseur résonnant LLC comprenant :
- une entrée de courant continu ayant une borne positive et une borne négative ;
- une sortie de courant alternatif ayant une borne de phase et une borne de neutre;
- une topologie de commutateur constituée d'au moins un premier demi-pont ayant un premier commutateur (X1) en série avec un deuxième commutateur (X2), ledit premier commutateur (X1) étant connecté à une extrémité à la borne positive de l'entrée de courant continu, ledit deuxième commutateur (X2) étant connecté à une extrémité à la borne négative de l'entrée de courant continu, l'autre extrémité du premier commutateur (X1) étant connectée à l'autre extrémité du deuxième commutateur (X2), définissant une première extrémité commune, ladite première extrémité commune étant connectée à la borne de phase de la sortie de courant alternatif ;
- un bobinage inducteur L1 (5) ;
et la partie réceptrice apte à être connectée à une batterie (10) d'un appareil à charger comprenant un circuit redresseur (7) pour redresser le courant alternatif circulant dans un bobinage induit L2 (6) du circuit ;
le dispositif comprenant également un circuit de contrôle pour ajuster la fréquence de commutation et la modulation des commutateurs en fonction de la charge ;
**caractérisé en ce que** chaque au moins un demi-pont du convertisseur résonnant LLC comprend au moins un diviseur résistif comprenant deux résistances en série (RPa, RPb), la première extrémité du premier diviseur résistif étant connectée à ladite première extrémité commune, la seconde extrémité du premier diviseur résistif étant connectée à la borne négative de l'entrée de courant continu, le premier diviseur résistif permettant de mesurer la tension de phase;
et **en ce que** le circuit de contrôle est configuré pour s'assurer que la fréquence de commutation est toujours au-dessus de la fréquence de résonance et avec un fonctionnement en commutation à tension nulle ou ZVS, sur base de la comparaison dans le temps des signaux de grille (GA, GB) des commutateurs d'un même demi-pont et de la tension drain-source (GA_FB) d'un de ces commutateurs.

2. Le dispositif de charge selon la revendication 1, **caractérisé en ce qu'**il comprend un seul demi-pont ayant le premier commutateur (X1) en série avec le deuxième commutateur (X2), la partie émettrice comprenant une ou plusieurs capacités, disposée(s) de l'une des manières suivantes :
- une première capacité (C3) étant connectée à une extrémité à la borne positive de l'entrée de courant continu, une seconde capacité (C4) étant connectée à une extrémité à la borne négative de l'entrée de courant continu, l'autre extrémité de la première capacité (C3) étant connectée à l'autre extrémité de la seconde capacité (C4), définissant une deuxième extrémité commune, la deuxième extrémité commune étant connectée à la borne de neutre de la sortie de courant alternatif, et une troisième capacité (Cs) étant située entre la deuxième extrémité commune et la borne neutre de la sortie de courant alternatif ; ou
- une première capacité (C3) étant connectée à une extrémité à la borne positive de l'entrée de courant continu, une seconde capacité (C4) étant connectée à une extrémité à la borne négative de l'entrée de courant continu, l'autre extrémité de la première capacité (C3) étant connectée à l'autre extrémité de la seconde capacité (C4), définissant une deuxième extrémité commune, la deuxième extrémité commune étant connectée à la borne de neutre de la sortie de courant alternatif; ou
- une seule capacité (C3) étant connectée à une extrémité à la borne positive de l'entrée de courant continu et à l'autre extrémité à la borne de neutre de la sortie de courant alternatif ; ou
- une seule capacité (C4) étant connectée à une extrémité à la borne négative de l'entrée de courant continu et à l'autre extrémité à la borne de neutre de la sortie de courant alternatif.

3. Le dispositif de charge selon la revendication 1, **caractérisé en ce que** le commutateur comprend deux demi-ponts, le deuxième demi-pont ayant un troisième commutateur (X3) en série avec un quatrième commutateur (X4), le troisième commutateur (X3) étant connecté à une extrémité à la borne positive de l'entrée de courant continu, le quatrième commutateur (X4) étant connecté à une extrémité à la borne négative de l'entrée de courant continu, l'autre extrémité du troisième commutateur (X3) étant connectée à l'autre extrémité du quatrième commutateur (X4), définissant une deuxième extrémité commune, la deuxième extrémité commune étant connectée à la borne de neutre de la sortie de courant alternatif,
et **en ce qu'**un second diviseur résistif est prévu, comprenant deux résistances en série (RNa, RNb), la première extrémité du second diviseur résistif étant connectée à ladite seconde extrémité commune et la seconde extrémité du second diviseur résistif étant connectée à la borne négative de l'entrée de courant continu, le second diviseur résistif permettant de mesurer la tension de neutre,
le bobinage inducteur L1 (5) étant en série avec une capacité (Cs), l'ensemble étant connecté entre la première extrémité commune et la seconde extrémité commune.

4. Le dispositif de charge selon l'une quelconque des revendications précédentes, **caractérisé en ce que** le circuit de contrôle, permettant de détecter si le circuit (4) est en fonctionnement ZVS ou non, établit une puissance de sortie du circuit (4) en fonction du résultat obtenu.

5. Le dispositif de charge selon l'une quelconque des revendications précédentes, **caractérisé en ce que** le circuit redresseur (7) comprend un pont à diodes (D1, D2, D3, D4).

6. Le dispositif de charge selon l'une quelconque des revendications précédentes **caractérisé en ce que** la partie émettrice comprend un convertisseur DC/DC (2) pouvant se connecter à une source d'énergie électrique (1) et fournissant une tension sur un câble (3) permettant d'alimenter le circuit électrique (4) de type convertisseur résonnant LLC.

7. Le dispositif de charge selon l'une quelconque des revendications précédentes, **caractérisé en ce que** la partie réceptrice comprend un circuit de système de gestion de batterie (9), dit « BMS », connecté au circuit redresseur (7) et, en utilisation, à une batterie (10) à recharger.

8. Le dispositif de charge selon l'une quelconque des revendications précédentes, **caractérisé en ce que** la partie réceptrice comprend une carte de transmission (12) connectée au BMS (9) à l'aide d'un canal de communication (11) permettant en utilisation d'envoyer l'information d'état de la batterie (10) à la partie émettrice pour permettre de déterminer le besoin en charge de la batterie (10).

9. Le dispositif de charge selon la revendication 7, **caractérisé en ce que** le canal de communication (11) est un canal radio-fréquence, connecté à une carte de réception (13) prévue dans la partie émettrice, la carte de réception (13) étant connectée au circuit électrique (4) au moyen d'un canal de communication (14), permettant en utilisation le décodage et l'envoi de l'information radio au circuit électrique (4) responsable de la recharge.

10. Le dispositif de charge selon l'une quelconque des revendications 4 à 9, **caractérisé en ce qu'**il comprend un système de détection du courant de fuite comprenant :
- un filtre de mode commun ajouté en série au circuit électrique (4), comprenant deux inductances de fuite LMCP (33) et LMCM (34), ;
- deux capacités Cpar1 (31) et Cpar2 (32) modélisant la capacité parasite de couplage des inductances L1 et L2 ; et
- une résistance à la terre Rtouch (35) pour modéliser le cas d'une personne touchant le circuit ;
le courant de fuite étant calculé en mesurant la tension aux bornes de la seconde inductance (34) par un détecteur de tension (36), cette tension étant une image du courant de fuite qui est la somme des courants dans Rtouch (35), Cpar1 (31) et Cpar2 (32) et le système de détection de courant de fuite étant configuré pour stopper la conversion si ladite tension dépasse un seuil, par exemple 500mVrms.

11. Le dispositif de charge selon l'une quelconque des revendications précédentes, **caractérisé en ce qu'**il comprend un système d'appairage de l'inducteur L1 (5, 100) et de l'induit L2 (6, 101), comprenant un premier interrupteur reed (103) sur l'inducteur et un second interrupteur reed (104) sur l'induit ainsi qu'un aimant permanent (102) et une bobine commandable (105) prévus respectivement sur l'induit et l'inducteur.

12. Le dispositif de charge selon la revendication 10, **caractérisé en ce que** l'inducteur (5) et l'induit (6) ont des formes mécaniques complémentaires propices à un centrage naturel, plusieurs aimants permanents (102) étant disposés sur le pourtour de l'inducteur (5).

13. L'utilisation du dispositif de charge selon l'une quelconque des revendications précédentes, **caractérisé en ce que** la partie réceptrice est prévue dans un système de génération de vagues (21), autonome et intelligent, destiné à créer une vague maîtrisée sur une surface liquide, comprenant une autonomie énergétique embarquée (10) restant à poste dans le générateur de vagues (21) lors du rechargement.

14. Un système de génération de vagues, autonome et intelligent, destiné à créer une vague maîtrisée sur une surface liquide, ledit système comprenant un générateur de vagues (21) comprenant :
- un corps externe (22) faisant office d'enveloppe entourant un corps interne (23) ;
- un dispositif de déplacement du corps interne (24) configuré pour rendre en utilisation le corps interne (23) oscillant à l'intérieur du corps externe (22) en vue de transmettre l'énergie au liquide et ainsi créer une vague ;
- une autonomie énergétique embarquée (10) destinée à fournir de l'énergie au dispositif de déplacement (24);
- des moyens de recharge de l'autonomie embarquée (10),
**caractérisé en ce que** lesdits moyens de recharge comprennent un dispositif de charge par induction avec tolérance au positionnement selon l'une des revendications 1 à 13, ladite partie émettrice étant située hors du liquide et la partie réceptrice étant solidaire du générateur de vagues (21) et connectée à l'autonomie embarquée (10) du système de génération de vagues.

15. Le système de génération de vagues selon la revendication 14, **caractérisé en ce que** la partie réceptrice est fixée sur la coque externe (22).

16. Le système de génération de vagues selon l'une des revendications 14 et 15, **caractérisé en ce que** les moyens de recharge de l'autonomie énergétique embarquée (10) restent à poste dans le générateur de vagues (21) lors du (re)chargement.

17. Le système de génération de vagues (1) selon l'une quelconque des revendications 14 à 16, **caractérisé en ce que** la connexion de la partie émettrice à la partie réceptrice du dispositif de charge se fait :
- soit à l'aide d'une perche de rechargement ;
- soit à l'aide d'un véhicule de chargement mobile (29), de type drone nautique ou aérien ;
- soit par déplacement autonome du générateur (21) jusqu'à une station de chargement grâce à un contrôle automatique et régulé de sa position.
